# EUROPEAN PATENT APPLICATION

(11) **EP 2 674 285 A1**
(43) Date of publication of application: **18.12.2013**
(21) Application number: 12382241.3
(22) Date of filing: 15.06.2012
(51) Int. Cl.: B29C 70/44, B29C 70/48

(54) **Method and conforming tool for manufacturing pieces of composite material with a high dimensional quality**

(71) Applicant: Airbus Operations S.L., 28906 Getafe, Madrid (ES)
(72) Inventor: Márquez López, Ignacio José, 28906 GETAFE (Madrid) (ES); Cerezo Arce, David, 28906 GETAFE (Madrid) (ES); Fernández Monje, Fernando, 28906 GETAFE (Madrid) (ES); Antolín Ruiz, Joaquin, 28906 GETAFE (Madrid) (ES); Colas Garcia, Noelia, 28906 GETAFE (Marid) (ES)
(74) Representative: Ungria López, Javier

(57) **Abstract**

Manufacturing method for pieces of composite material (9) and a device for implementing this method, which comprises: forming a piece of composite material, subject this piece to a first partial curing cycle; placing said piece in a conforming tool (10); subject the piece to a second curing cycle which comprises heating the piece at its curing temperature at the same time that it is conformed by the application of forces that push the piece against a conforming surface of a conforming tool (10). The manufactured piece appears with the springback effect eliminated and having a high dimensional quality.

## Description

### OBJECT OF THE INVENTION

The present invention relates to a method for manufacturing pieces made of composite material with demanding dimensional tolerances (HARTM) and a conforming tool for implementing this method. The main field of application of the present invention is the field of the manufacture of aeronautical structures.

### BACKGROUND OF THE INVENTION

In the field of the manufacture of pieces of composite material made with polymer resins and fiber reinforcements numerous techniques for obtaining the same are known. Some of the techniques mostly used to produce composite pieces are the resin transfer molding technique (RTM) when the high accuracy is a must and the manufacturing techniques that use pre-impregnated composite materials.

However all the techniques well known in the state of the art, which include the techniques mentioned above, have some elastic recovery when the piece is removed from the curing tool, also called "springback" of the manufactured pieces. This phenomenon is especially relevant when it comes to manufacturing thin panels or long pieces.

Due to the internal forces that appear in the pieces during the curing process, once said pieces have been taken out of the curing tool appear slightly bent having a rest position with a shape in the piece that is not exactly the one desired. The problem of the springback is specially critical in pieces that affect the external shape of an aircraft as for example the structural elements which conform aeronautical surfaces. Other problem associated with the manufacture of this type of pieces is the high cost derived from the assembly process when it is necessary to recover the desired tolerances of the piece through shimming or any other technique of adjustment.

The method described in this invention is carried out in two main steps. The first main step of the manufacturing method is to pack the layers that constitute the piece and launch the curing process. Said curing process begins with a partial curing of the piece, obtaining as a result pieces which are apparently finished. As it also happens in the conventional full curing cycle, these pieces have the mentioned springback. In the second main step, the pieces are subjected at the same time to a combination of a high accuracy conforming process and the completion of the curing in order to achieve the final shape of them.

The use of two curing cycles in manufacturing processes has been used with other completely different purposes, for example, document WO 2008/012378 A1 describes a method for producing a piece of composite material made with a polymeric resin and fiber reinforcement from at least two subcomponents which comprises two curing cycles. This document, as the present invention, describes a manufacturing process to integrate several parts of composite material in two steps, however this is not the object of the present invention. The objet of the present invention is to provide a manufacturing method of high accuracy aeronautical pieces made of composite material that eliminates the "springback" problem while represents an important saving in terms of manufacturing and assembly time and cost.

### DESCRIPTION OF THE INVENTION

To achieve the objectives and avoid the drawbacks listed above, the invention consists of a manufacturing method of pieces of composite material with high dimensional accuracy; a device to implement this method is also disclosed. These pieces will be preferably long pieces or thin panels and the composite material shall be preferably made of at least one polymer resin and one fiber reinforcement.

A first object of the present invention is a manufacturing method of pieces of composite material that comprises at least the following stages:
a) placing the pack of layers of the piece in a curing tool. In a preferred embodiment, the curing tool is a RTM mold, in the interior of which the pack of preforms have been previously arranged, and the resin is then injected into the mold. In other preferred embodiment, the composite material is a pre-impregnated material and the corresponding pack is placed in an open curing tool.
b) Subjecting the composite material to a first partial and short curing cycle through the heating of the material at a temperature higher than the resin gel temperature and lower than the resin curing temperature, resulting in a partially cured piece. In one preferred embodiment of the present invention the polymer resin is a thermoset resin. In a more preferred embodiment of the present invention the thermoset resin is an epoxy resin and the corresponding temperature is around 150°C. The resulting piece has the appearance of a cured piece but due to the partial curing process this piece still allows a later small dimensional correction, so its physical characteristics allow a small further conforming, being slightly conformable by mechanical means.
c) Removing the partially cured piece from the curing tool.
d) Placing the partially cured piece in a conforming tool that comprises force applying means. These force applying means, introduce forces in different points of the piece or, in a distributed way over the piece, pushing it against a cradle in order to give the final shape to the piece. The surface of the cradle in contact with the piece determines the final shape of the piece.
e) Subjecting the piece placed in the conforming tool to a complement curing cycle of the previous curing cycle comprising heating the piece at the curing temperature obtaining the cured piece. At the same time, the force applying means undergo the piece to forces for eliminating the undesired bending of said piece. In this manner, the face of the piece in contact with the cradle, which is compressed against it, acquires a shape determined by the shape of the face of the cradle in contact with the piece. So the mentioned forces combined with the curing temperature to which the piece is heated gives the piece its final shape. This conforming tool has to introduce only the loads as said before, and at the same time it has to avoid any other parasitic loads that could appear in any other directions during the heating process. These parasitic loads could be caused, for instance, by the different thermal expansion between elements of the conforming tool in contact with the piece and the piece itself.
f) Taking the cured piece out from the conforming tool. The first and second curing cycle will be carried out according to the corresponding curing profile of the composite material.

Due to the characteristics of the procedure the piece obtained, with the final shape and completely cured, has a high dimensional quality.

The conforming tool for carrying out the procedure described above it is also disclosed. Said conforming tool at least comprises:
- a cradle with a high rigidity to flexure, that has a conforming surface that provides the piece with the final shape, being made the cradle of a material with a coefficient of thermal expansion similar to the coefficient of thermal expansion of the composite material. The rigidity to flexure of the cradle has to be at least one order of magnitude greater than that of the piece. If a further fine adjustment is necessary, the cradle could be easily machinable. In a preferred embodiment the cradle is made of invar. The conforming surface of the cradle which is in contact with the piece, besides of the desired curvature, could present stages, changes in the thickness or small torsions in function of the geometry of the piece to be manufactured.
- force applying means for undergoing the piece to forces to neutralize the geometrical distortion of said piece, acquiring the face of the piece in contact with the cradle, which is compressed against it, a shape determined by the shape of the face of the cradle in contact with the piece.

In order to reduce the cost associated with the materials used in the manufacturing of the cradle, the present invention has foreseen another preferred embodiment that comprises a rigid frame of steel, which is cheaper than invar, a thinner cradle of, for example, invar, relative motion means between the frame and the cradle, and force applying means which compress the piece against the cradle. This hybrid solution reduces considerably the final cost of the conforming tool since the material used in the manufacture of the cradle is very expensive and this hybrid solution reduces the thickness of the cradle by using a frame which is made of a more conventional and cheaper material.

Being the cradle linked to the frame by the interposition of the relative motion means, the lower planar surface of the cradle is free to move on the upper planar surface of the frame. The relative motion means placed between the frame and the cradle avoid the generation and transmission of forces between the frame and the cradle. In a more preferred embodiment, this relative motion means are rollers.

In other preferred embodiment the invention the force applying means are either point force applying means which introduce the force generated in different points of the piece or distributed force applying means.

In a more preferred embodiment, the point force applying means are at least three force applying modules. In turn, each one of the force applying modules comprises:
- a linkage assembly of the force applying modules with the tool. This linkage assembly transmits the forces from the force applied modules to a fixed point of the tool;
- at least one compressing element which assures that the applied force remains nearly constant; and,
- clamping units that constitute the direct interface between the piece and the tool. These clamping units confine the piece and diffuse the concentrated force applied by the compressing element in a nearly uniform manner in the area of the piece in contact with the
force applying module.

In another embodiment of the invention, the distributed force applying means are a vacuum bag, inside which the piece is introduced. This vacuum bag, once the vacuum is created, pushes the piece against the cradle by applying the force generated in a distributed way.

In another embodiment of the present invention, the distributed force applying means is a bladder placed between the piece and a confining element. This bladder, once inflated, pushes the piece against the cradle.

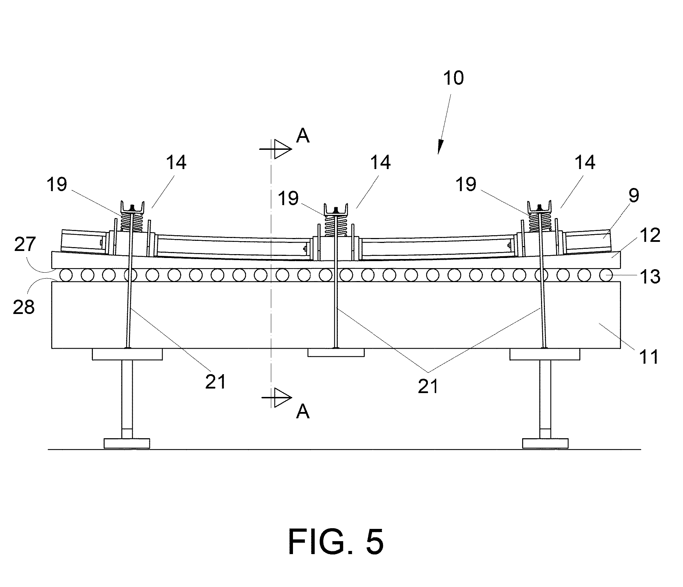

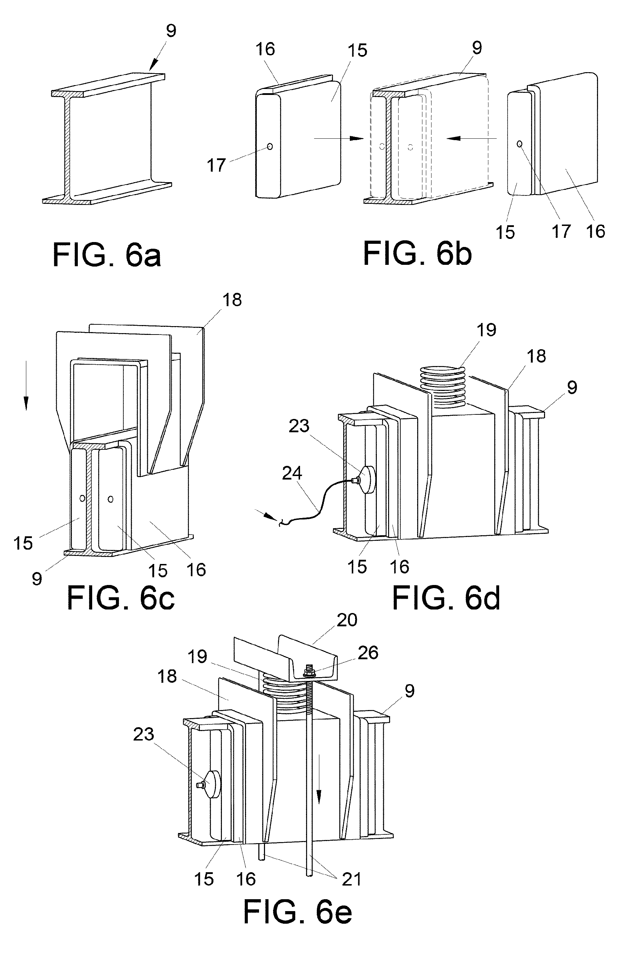

In connection with the linkage assembly described above, the present invention has foreseen two different embodiments for linking the force applying modules to the tool. The first embodiment has foreseen that the linkage assembly attaches the force applying module directly to the cradle. The second embodiment has foreseen that, if the conforming tool comprises a frame, relative motion means and a cradle, the linkage assembly attaches the force applying modules to the frame by interposition of at least one isostatic link. These isostatic links do not transmit loads in the direction of the lower planar surface of the cradle. This second embodiment is shown in figures 5 to 7 of the present description.

### BRIEF DESCRIPTION OF THE FIGURES

Figure 1.- It shows a frame of an aircraft formed by a plurality of sections. The dotted line shows a very magnified "springback" effect in two sections of the frame of the aircraft.
Figure 2.- It shows an aeronautical beam. The beam drawn in continuous line is the desired beam free of springback and the beams drawn in dotted line are the obtained beams affected by the springback.
Figure 3.- It shows a view of a RTM mold used for the first curing stage in a particular embodiment of the present invention.
Figure 4.- It shows a view of the asymmetric profile beam obtained from the mold of figure 3.
Figure 5.- It shows a lateral view of a particular embodiment of the conforming tool designed to implement the method object of the invention.
Figure 6.- It shows an schematic view of a particular embodiment of the beam and the force applying module object of the invention. Specifically, figures 6a-6e show the different elements which conform this particular force applying module, its assembly sequence and how it confines the beam.
Figure 7.- It shows a schematic cross-section view through the dotted line A-A of figure 5.
Figure 8.- It shows a perspective view of a particular embodiment of the present invention in which the force applying means is a bladder that is placed between the piece and confining elements. The zoom refers to a cut view of the conforming tool through the dotted line B-B.
Figure 9.- It shows a thin panel with a pair of swagged cutouts on it. The panel drawn in dotted line is the desired panel free of springback and the panel drawn in continuous line is the panel affected by the springback.
Figure 10.- It shows a perspective view of a particular embodiment of the present invention in which the piece is placed inside a vacuum bag which in turn is fixed to the cradle.
Figure 11.- It shows a graph illustrating a particular embodiment of the thermal profile of the curing process described in the present invention applied to a piece made of a thermoset resin.

### DESCRIPTION OF AN EXAMPLE OF EMBODIMENT OF THE INVENTION

Next, a description of an example of embodiment of the present invention is carried out, with illustrative character and without limitation, making reference to the numbering adopted in the figures.

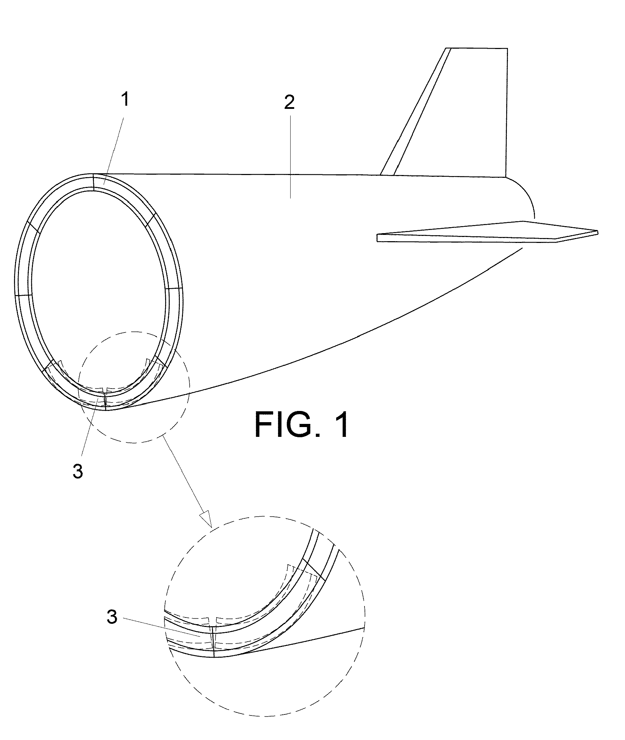

Figure 1 shows in a simple and general way, how the springback (3) affects to the accuracy in the assembly of the different sections of a frame (1) in an aircraft (2).

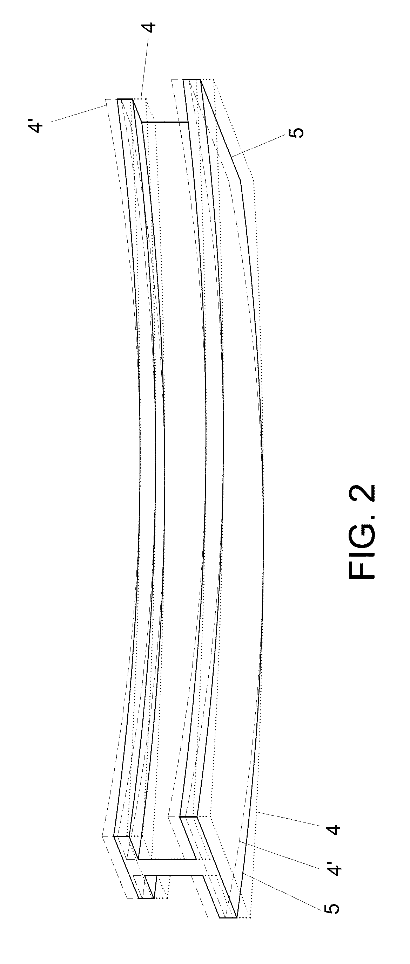

In figure 2 is shown in detail how the springback affects to a beam with asymmetrical profile being the desired beam free of springback drawn in continuous line (5) and the manufactured beams drawn in dotted line (4, 4'). The beams drawn in dotted line (4,4') are affected, in both cases, by the springback effect since the manufactured beams have a curvature that it is not the desired.

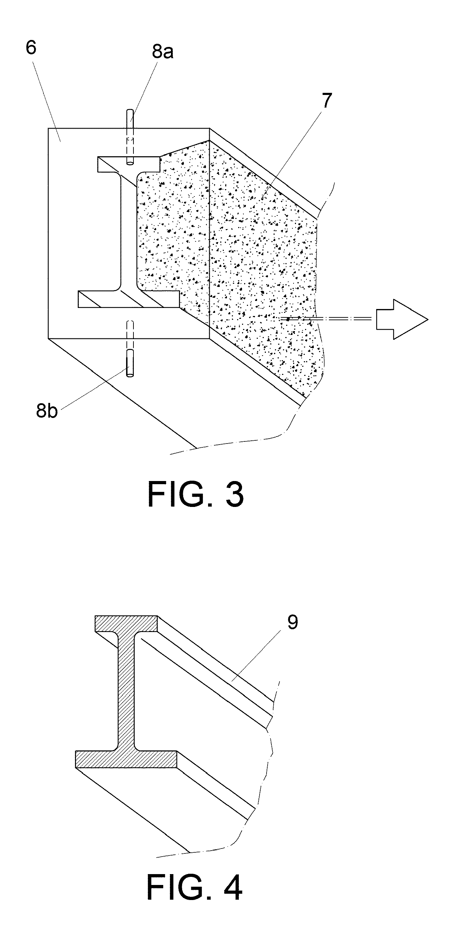

Thus, as shown in figure 3, in the first curing stage, once the pack of preforms is introduced on the female (6) of the RTM mold, the same is closed by the male (7).

Subsequently the mold (6,7) is heated and the resin is injected through the resin inlet port (8b) and the air is removed through the air outlet port (8a). Once the cycle has finished the piece cools down until it reaches the optimal temperature for its demolding.

The obtained piece (9) is, as shown in figure 4 which is an example of the embodiment of the present invention, a curved beam of 3 or 4 meters in length and with an asymmetric profile. This beam (9) suffers the springback effect.

The demolded partially cured beam (9) has the appearance of a cured piece but due to the partial curing process this beam (9) still allows a later small dimensional correction.

As shown in figure 5, the beam (9) is placed into a conforming tool (10) for giving it the final shape. The main body of the conforming tool (10) is formed by a frame (11) of a length similar to the length of the beam (9) to be conformed and much more rigid in flexion than said beam (9) and a cradle (12) made of a material with a coefficient of thermal expansion similar to the coefficient of thermal expansion of the composite material, as for example, invar.

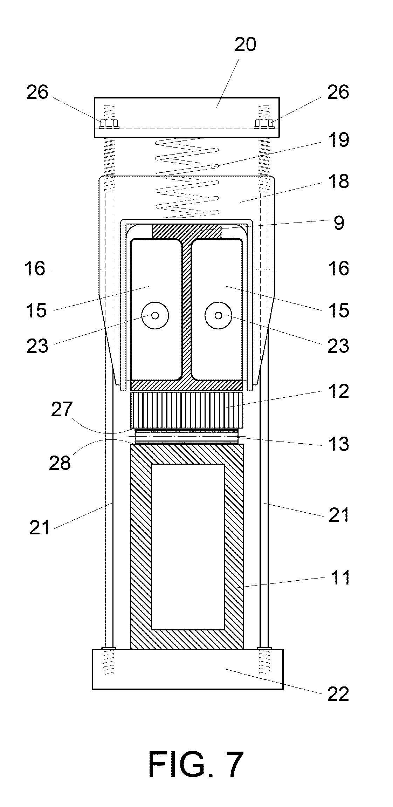

The cradle (12) must be made of this kind of material in order to not suffer deformations, especially in the longitudinal axis, during the heating process of the conforming tool (10). In order to avoid the generation of longitudinal loads between the frame (11) and the cradle (12) in case both were rigidly coupled that could be transmitted to the beam (9), relative motion means (13) between the frame (11) and the cradle (12) have been placed. As shown in figures 5 and 7, these relative motion means (13), which allow the free longitudinal movement of the lower planar surface (27) of the cradle (12) on the upper planar surface (28) of the frame (11), may be rollers. By the interposition of the rollers (13) between the upper planar surface (28) of the frame (11) and the lower planar surface (27) of the cradle (12), the present embodiment of the invention avoids the generation of undesired longitudinal loads between these two parts of the conforming tool. As shown in figures 5 to 7, the beam (9) is fixed to the conforming tool (10) by the force applying modules (14) which in turn integrate clamping units that firmly attach the force applying modules to the beam (9). These clamping units also distribute the load generated during the conforming process along the surface in contact with the beam (9). The load is generated by a spring (19) which in turn controls the application of the load on the beam allowing it to maintain said load nearly constant during the conforming process. Then, the force applying modules (14) are placed along the beam. In a preferred embodiment of the invention these force applying modules (14) are three, but their number will depend on the length and the desired geometry of the beam (9).

These clamping units, which are integrated in the force applying modules (14), comprise one bladder (15) placed at each side of the central portion of the beam (9). The bladders (15) have a metallic piece (16) on their outer surface that actuates as a mechanical boundary and an inlet pressure port (17) through which compressed air is introduced. An injector (23) is connected to inlet pressure port (17) through which pressure air is injected, the air coming through air ducts (24) (the air pressure generator is an external device not shown in the figures).

The assembly formed by the beam (9) and the two bladders (15) is confined by a yoke (18). The objective of the bladders (15) is, once they are inflated, to confine firmly the beam (9) having, at the same time, a soft contact with the beam surface avoiding deformations and scratches generated by the loads applied on the beam (9).

The force applying modules (14) also comprises the spring (19) which is placed between the yoke (18) and an upper fixing piece (20). At both ends of the upper fixing piece (20) is placed an isostatic link (21), as for example a rod, whose upper end is threaded. The lower end of the rods is fixed to a lower fixing piece (22). This lower fixing end is placed under the lower face of the frame (11). The spring (19) is loaded by means of a couple of nuts (26) which turn along the thread of the isostatic links (21). The load generated by the spring is transmitted to the beam (9) during the conforming process.

The second curing stage is carried out in an oven. After forces are applied on the beam (9), the conforming tool (10) and the beam (9) are introduced into the oven.

In this moment, the mechanical loads transmitted by the compression elements, such as the compression springs (19) of the force applying modules (14), deform the beam (9) in the perpendicular axis, with respect to the longitudinal axis of the beam (9), until the lower face of the beam (9) is completely adapted to the upper face of the cradle (12).

Due to the thermal expansion of the materials, when the conforming tool (10) is heated, its different elements suffer deformations. The frame (11) of the conforming tool (10) suffers thermal expansion but the longitudinal forces that would be generated by the thermal expansion if the frame (11) and the cradle (12) were rigidly coupled, do not appear due to the interposition of the rollers (13) herein disclosed.

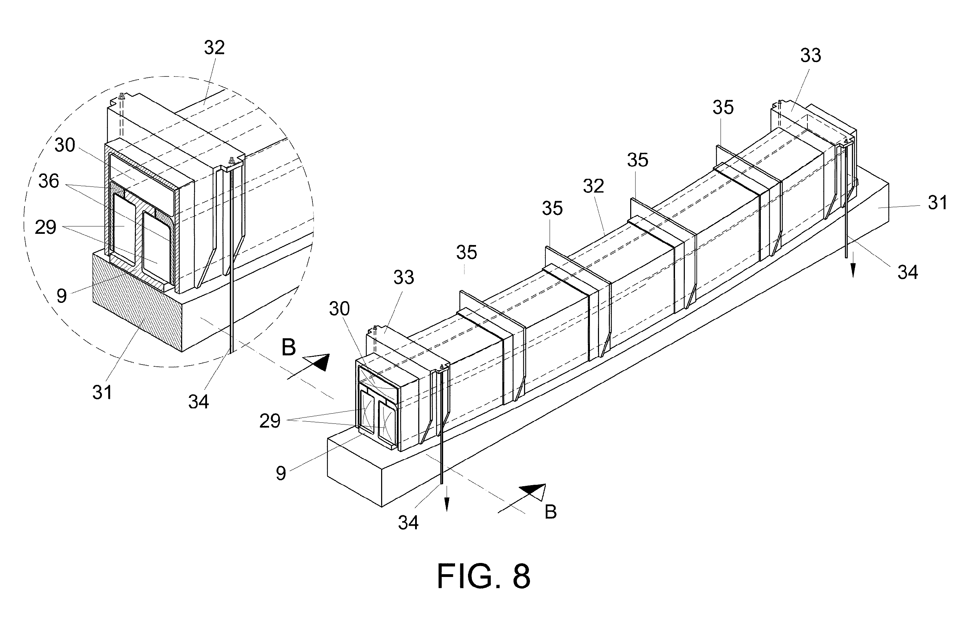

In figure 8, it is shown a perspective view of a particular embodiment of the conforming tool object of the present invention. The beam (9) is confined by means of a confining element (29), which could be a bladder, placed at each side of the central portion of the beam (9). The confining elements (29) have a metallic piece (36) on their outer surface that actuates as a mechanical boundary. Over the upper surface of the beam (9) is placed another bladder (30) which, once inflated with pressure air, is in charge of creating a pressure, perpendicular to the longitudinal axis of the beam (9), that pushes the beam against the cradle (31). In turn, the beam (9), the confining elements (29), the metallic pieces (36) and the bladder (30) are confined by means of a yoke (32) along the entire beam (9). The confining elements (29), the yoke (32), the metallic pieces (36) and the bladder (30) have at least the length of the beam (9) in such a way that the pressure generated by the bladder (30), once inflated, is transmitted to the beam (9). The yoke (32) comprises, at both ends, an upper fixing piece (33) that has threaded at both ends of it an isostatic link (34), as for example a rod. The lower end of the isostatic link (34) will be fixed directly to the cradle (31) or to any other part of the conforming tool. In order to restrict the deformation of the yoke (32) when the confining elements (29) and the bladder (30) are inflated, several secondary reinforcements (35) have been placed along the yoke.

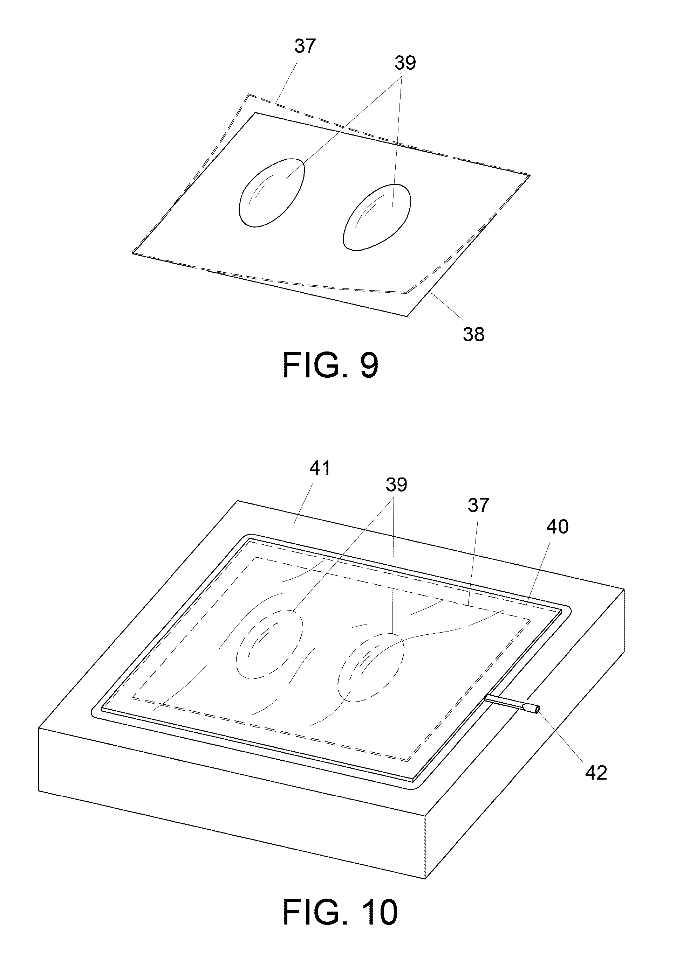

In figure 9 is shown in detail how the springback affects to a panel with a pair of swagged cutouts (39), being the desired panel free of springback drawn in continuous line (38) and the manufactured panel drawn in dotted line (37). The panel drawn in dotted line (37) is affected by the springback effect since the manufactured panel has a shape that it is not the desired. In figure 10 is shown the panel (37) that suffers deformation due to the springback effect, inside of a vacuum bag (40). This vacuum bag (40) is fixed to the cradle (41) and once the panel (37) is placed inside and the bag (40) is sealed, the air is removed trough an outlet port (42). Then the vacuum bag (40) generates a distributed force on the upper surface of the panel (37) that pushes the lower face of the panel (37) against the upper surface of the cradle (41), conforming in this way the panel. The obtained panel is the panel (38) drawn in continuous line in figure 9 free of springback effect.

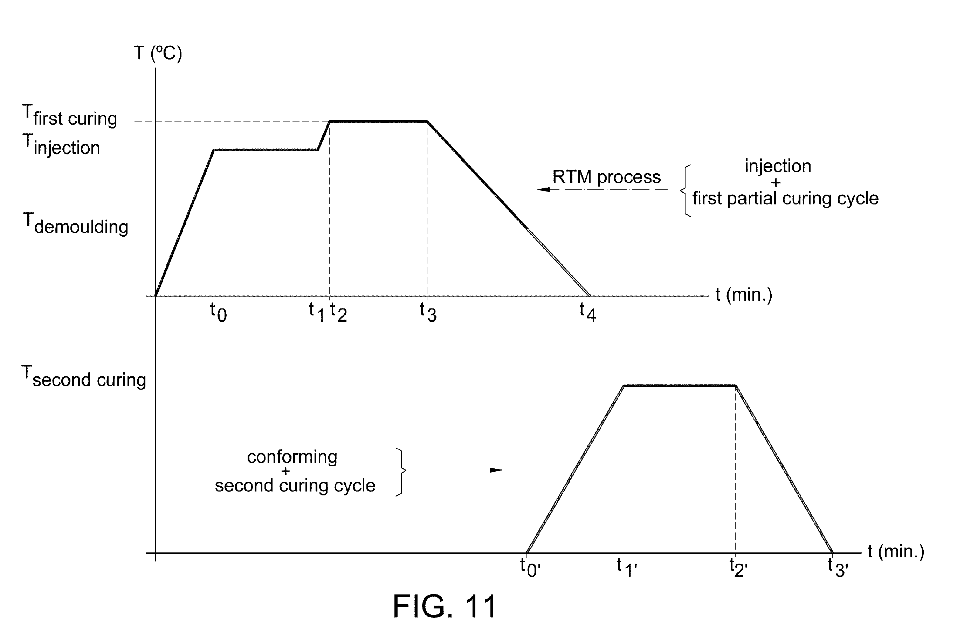

In figure 11, is shown a particular curing cycle of a piece made with a thermoset resin. In the upper part of the graph is shown the first curing cycle of the piece disclosed in the present invention. Firstly the RTM mould with the pack of preforms is heated until the temperature of injection (T_{injection}) is achieved. This temperature is in a preferred embodiment 120°C. Then the injection of the resin is carried out for approximately 30, minutes (t₁-t₀). After that, the RTM mold is heated until (t₂-t₁) it reaches the first curing temperature (T_{first curing}) that is 150°C. The RTM mold is maintained at this temperature for 45 minutes (t₃-t₂). Then, the mold cools down until (t₄-t₃) it reaches a suitable temperature to be demolded (T_{demoulding}) that is below 60°C.

The lower part of the graph of figure 11 shows the second curing cycle of the piece, once demolded from the RTM mold, during which the mentioned piece is conformed.

It is convenient not wait long time between the first partial curing cycle and the second curing cycle since the piece could suffer a spontaneous curing process at ambient temperature. The oven is heated until (t_{1'}-t_{0'}) the curing temperature (T_{second curing}) is achieved. Then the piece once it has been placed in the conforming tool and with the compressing elements previously loaded, is introduced into the oven for 1.5 hours (t_{2'}-t_{1'}). After this time the piece and the conforming tool cool down (t_{3'}-t_{2'}) and finally the obtained piece is taken out from the conforming tool.

The obtained piece is now the final piece. This piece, thanks to the described procedure and the use of the conforming tool described, eliminates the "springback.".

In addition to the improvement of having "springback-free" pieces, the described method entails a significant saving of time in the manufacture and assembly processes of pieces.

The embodiments disclosed herein are just for illustrating the nature of the present invention and they can not be understood as a limitation of the scope of the present invention.

## Claims

1. Method for manufacturing pieces of composite material, the composite material comprising at least one polymer resin and a fiber reinforcement, **characterized in that** it comprises the following stages:
a) placing the composite material in a curing tool;
b) subjecting the composite material to a first partial curing cycle through the heating of the material at a temperature higher than the resin gel temperature and lower than the resin curing temperature, resulting in a partially cured piece;
c) placing the partially cured piece in a conforming tool;
d) subjecting the piece to a second curing cycle comprising heating the piece at the curing temperature at the same time that the conforming tool actuates on the piece pushing it against a cradle made of a material with a coefficient of thermal expansion similar to the coefficient of thermal expansion of the composite material; and,
e) taking the cured piece out from the conforming tool.

2. Method for manufacturing pieces of composite material, according to claim 1, **characterized in that** the polymer resin is a thermoset resin.

3. Method for manufacturing pieces of composite material, according to claim 2, **characterized in that** the first partial curing cycle is carried out at a temperature between 150°C and 160°C.

4. Method for manufacturing pieces of composite material, according to any one of the preceding claims, **characterized in that** the second curing cycle is carried out at a temperature of 180°C.

5. Conforming tool for manufacturing pieces of composite material for carrying out the procedure described in any of the preceding claims, **characterized in that** it comprises:
- a cradle rigid to flexure, that has a conforming surface that provides the piece with the final shape, being made the cradle of a material with a coefficient of thermal expansion similar to the coefficient of thermal expansion of the composite material; and,
- force applying means which compress the piece against the cradle, acquiring a face of the piece in contact with the cradle a shape determined by the shape of the face of the cradle in contact with the piece.

6. Conforming tool, according to claim 5, **characterized in that** it comprises:
- a frame rigid to flexure;
- a cradle whose lower planar surface is free to move on an upper planar surface of the frame by the interposition of relative motion means, that has a conforming surface that provides the piece with the final shape, being made the cradle of a material with a coefficient of thermal expansion similar to the coefficient of thermal expansion of the composite material;
- the relative motion means placed between the lower planar surface of the cradle and the upper planar surface of the frame for avoiding the generation of forces between the frame and the cradle; and,
- force applying means which compress the piece against the cradle, acquiring a face of the piece in contact with the cradle a shape determined by the shape of the face of the cradle in contact with the piece.

7. Conforming tool, according to any one of the preceding claims, **characterized in that** the force applying means are selected between point force applying means and distributed force applying means.

8. Conforming tool, according to claim 7, **characterized in that** the point force applying means are at least three force applying modules, comprising each of the force applying modules:
- a linkage assembly of the force applying modules with the tool;
- at least one compressing element which actuates pushing the piece against the cradle; and,
- clamping units that confine the piece and distribute a load applied by the compressing element uniformly along the contact area between the force applying module and the piece.

9. Conforming tool, according to claim 7, **characterized in that** the distributed force applying means is a vacuum bag inside which the piece is placed.

10. Conforming tool according to claim 7, **characterized in that** the distributed force applying means is a bladder placed between the piece and a confining element.

11. Conforming tool, according to any one of the preceding claims, **characterized in that** the cradle is made of invar.
